# EUROPEAN PATENT SPECIFICATION

(11) **EP 3 182 801 B1**
(45) Date of publication and mention of the grant of the patent: **12.12.2018**
(21) Application number: 16204287.3
(22) Date of filing: 15.12.2016
(51) Int. Cl.: H05B 33/08, B60L 1/14

(54) **LIGHTING DEVICE FOR VEHICLE**
BELEUCHTUNGSVORRICHTUNG FÜR EIN FAHRZEUG
DISPOSITIF D'ÉCLAIRAGE POUR VÉHICULE

(30) Priority: 18.12.2015 JP 2015247318
(43) Date of publication of application: 21.06.2017
(73) Proprietor: STANLEY ELECTRIC CO., LTD., Tokyo 153-8636 (JP)
(72) Inventor: MIYACHI, Mamoru, Tokyo, 153-8636 (JP); TANAKA, Satoshi, Tokyo, 153-8636 (JP)
(74) Representative: Klang, Alexander H.

(56) References cited:
- EP-A2- 2 911 478
- JP-A- 2012 048 862
- US-A1- 2005 231 971

## Description

### FIELD

This invention relates to a lighting or light-emitting device for vehicle and, particularly, to a light-emitting device for vehicle, including a multiplicity of light-emitting diodes (LEDs) arranged or disposed in a planar light emitting region.

### BACKGROUND

In recent vehicle headlamps, technique of real-time controlling light distribution depending on the front circumstances, referred to as adaptive driving beam (ADB), has attracted attention. According to ADB, when a car is driving with driving light distribution, i. e. high beam from headlamp, and a coming car is detected in the opposite lane, it is possible to reduce lights directed to only the area of the coming car among areas illuminated by the headlamp. The driver of the running car is given a field of view close to the high beam, whereas the driver of the coming car can be prevented from receiving glare.

Also, headlamp system capable of adjusting light distribution in the travelling direction depending on the steering angle of the wheel, referred to as adaptive front-lighting system (AFS), is becoming popular. As the light distribution is shifted right or left in accordance with the steering angle of the wheel, the field of view in the driving direction can be widened.

Headlamp system with changeable light distribution can be formed, by preparing an LED device in which a plurality of LEDs are distributed in array pattern, and on/off control of the respective LEDs and the drive currents (hence, brightness or luminance) in the on-state are real-time controlled, for example.

A vehicle headlamp system having an array of a multiplicity of LED chips distributed in matrix pattern and being capable of independently controllable lighting, and a projector lens disposed on the optical path of light beams emitted from the LED chips, and being capable of forming desired light distribution pattern in front direction by controlling lighting pattern in the LED chip array has been proposed (for example, see JP 2013-54849 A).

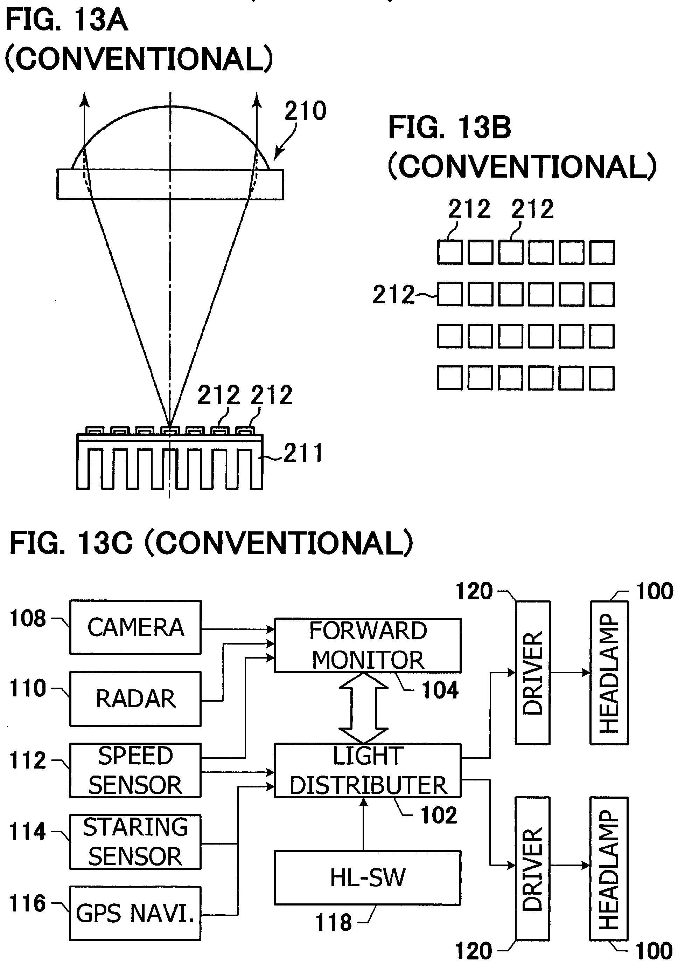

Fig. 13A is a side view of main parts of vehicle headlamp including a plurality of LEDs 212 arranged in matrix pattern on a support substrate 211 having a heat dissipating structure, and a projection lens 210 disposed in front of the LEDs. Semiconductor LED emits light of a wavelength determined by the band gap. When phosphor powder is mixed in sealing resin coated on the LED, the phosphor emits lights of particular wavelength. For example blue LED and yellow phosphor can cooperatively generate white light. Blue LED and red and green phosphors can also generate white light.

Fig. 13B is a plan view of the plurality of LEDs 212 arranged in a matrix pattern. A light source formed of the plurality of LEDs disposed in a matrix pattern (which may be called "matrix LEDs") is directed toward the vehicle front side. As in Fig. 13A, a projection lens 210 is disposed in front of the light source, and can project brightness or luminance distribution pattern of the LEDs to the front side.

Fig. 13C is a block diagram illustrating schematic structure of the headlamp system. A headlamp system 200 includes right and left vehicle headlamps 100, light-distribution control unit 102, forward monitoring unit 104, etc. Each of the vehicle headlamps 100 has a light source formed of matrix LEDs, a projector lens, and a lamp body for accommodating the light source and the projector lens.

The forward monitoring unit 104 is connected with various sensors as vehicle camera 108, radar 110, and vehicle speed sensor 112, and performs image processing of image data supplied from the sensors. The unit 104 detects forward vehicles (coming vehicle and vehicle going ahead), other bright objects on the road, division line (lane mark), and calculates data on attributes of forward objects and positions thereof required for light-distribution control. The calculated data are transmitted to the light-distribution control unit 102 and various on-board devices through in-vehicle LAN, etc.

The light-distribution control unit 102 connected with the vehicle speed sensor 112, steering-angle sensor 114, GPS navigation 116, headlamp switch 118, etc. determines light-distribution pattern corresponding to the driving scene, based on attributes of bright objects on the road (coming vehicle, vehicle going ahead, reflector, road lighting, etc.), the positions thereof (in front or at side), and the vehicle speed, which have been transmitted from the forward monitoring unit 104. The light-distribution control unit 102 determines control amounts in the light distribution changeable headlamp, for realizing desired light-distribution pattern.

The light-distribution control unit 102 determines control contents (lighting on/off, drive power, etc.) of each LED of the matrix LEDs, and send them to drivers 120, each of which converts information about the control amounts supplied from the light-distribution control unit 102 into instructions corresponding to operation of driving device and light-distribution control elements, and controls the operation of these components.

The vehicle headlamp forms brightness distribution in which brightness is high at central part (distribution center) and decreases toward peripheral parts. In the case of vehicle headlamp using semiconductor LED array, it is possible to control brightness by adjusting driving power for the semiconductor LEDs, and to form a desired brightness pattern. Power consumption in the semiconductor LED array will become high at the central part and decrease toward the peripheral parts.

US 2005/231971 A1 discloses a vehicular headlamp including: a first light source module having semiconductor light emitting elements; a first optical member for applying light generated by the first light source module to an area of the light distribution pattern of the vehicular headlamp; a second light source module that has semiconductor light emitting elements and generates light having the brightness higher than that of the light of the first light source module; and a second optical member for applying the light generated by the second light source module to an area narrower than the area to which the light is applied by the first optical member.

JP 2012-048862 A discloses a lamp assembly for a vehicle that utilizes a light source including an LED element without cutting part of light therefrom and capable of forming a luminance distribution where the light with a maximum peak portion can be arranged substantially at the cutoff line. In the lamp assembly for a vehicle equipped with a light source including an LED element and a wavelength conversion layer, the LED element is a face-up type one equipped with a rectangular substrate, an n-type semiconductor layer laminated on one surface of the substrate, an n-electrode formed at a narrow-width region including one of the longer sides of a surface of the n-type semiconductor layer and extended in a long-side direction, a plurality of active layers laminated on the surface of the n-type semiconductor layer and extending in a longer side direction of the substrate, and partitioned by at least one groove reaching the n-type semiconductor layers, a p-type semiconductor layer laminated on a surface of each of the plurality of active layers, a transparent electrode formed on a surface of each of the p-type semiconductor layers, and a p-electrode, extended in the same direction as the n-electrode, formed at a narrow-width region including the longer side further away from the n-electrode of each of the surface of the transparent electrodes.

### SUMMARY

Light conversion efficiency of fluorescence substances in phosphors carried on the semiconductor LED has temperature dependence. Therefore, the chromaticity of the semiconductor LED changes with the temperature. When semiconductor LED array is used as a light source for headlamp, and brightness distribution which is high at a central part and reduces toward the peripheral parts is formed, temperature distribution will be formed since heat generation and heat dissipation will not become uniform in the LED array surface, and chromaticity distribution will be formed due to this temperature distribution.

In a headlamp in which light emission pattern from a semiconductor LED array is projected through optical system such as lens or mirror to form light distribution pattern, the light distribution pattern will be given chromaticity distribution due to temperature distribution formed in the semiconductor LED array. When the chromaticity becomes different over the field of view of a driver, the driver will be given a sense of incompatibility.

An object of the embodiment is to provide vehicle lighting device using a semiconductor LED array which can realize light distribution pattern having less variation in chromaticity upon formation of brightness distribution in the surface of the semiconductor LED array.

According to an embodiment of the present invention, there is provided a lighting device for vehicle as set forth in claim 1. Preferred embodiments of the present invention may be gathered from the dependent claims.

Increase in brightness in semiconductor light emitting element array causes local temperature increase in the array, which brings local decrease in chromaticity. Chromaticity in peripheral parts may become higher than that in the central part. Chromaticity decreases with increase in the current density. Chromaticity distribution ascribed to the temperature distribution arising from brightness distribution can be compensated for by current density distribution.

### BRIEF DESCRIPTION OF DRAWINGS

Fig. 1A is a cross section of semiconductor light emitting elements in a lighting device, and Fig. 1B is a graph illustrating desirable light distribution pattern in field of view, and brightness distributions along the horizontal and vertical directions.
Fig. 2 is a schematic plan view of a light emitting diode array.
Fig. 3A is a graph illustrating relation of chromaticity of emitted lights on LED temperature, and Fig. 3B is a graph illustrating relation of chromaticity of emitted lights on current density in LED.

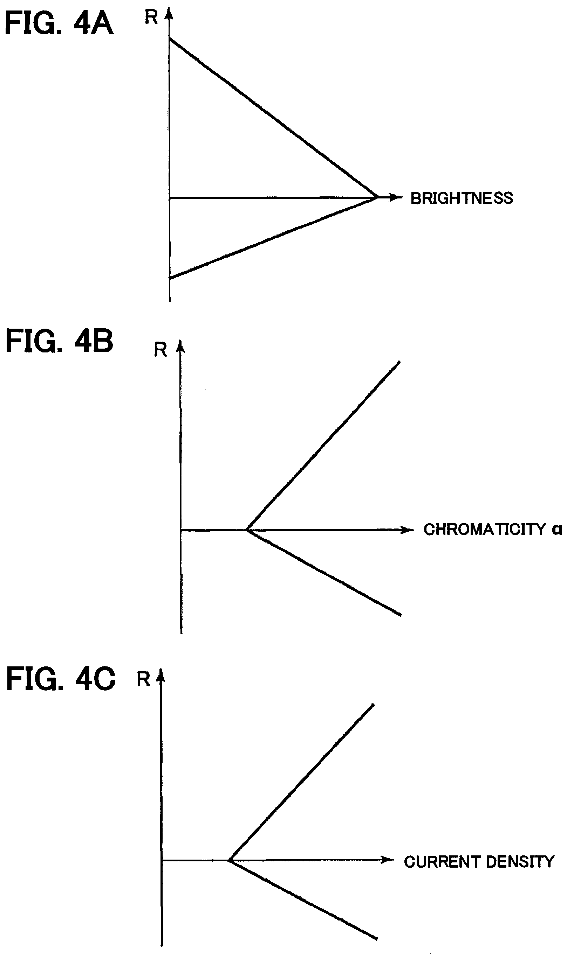

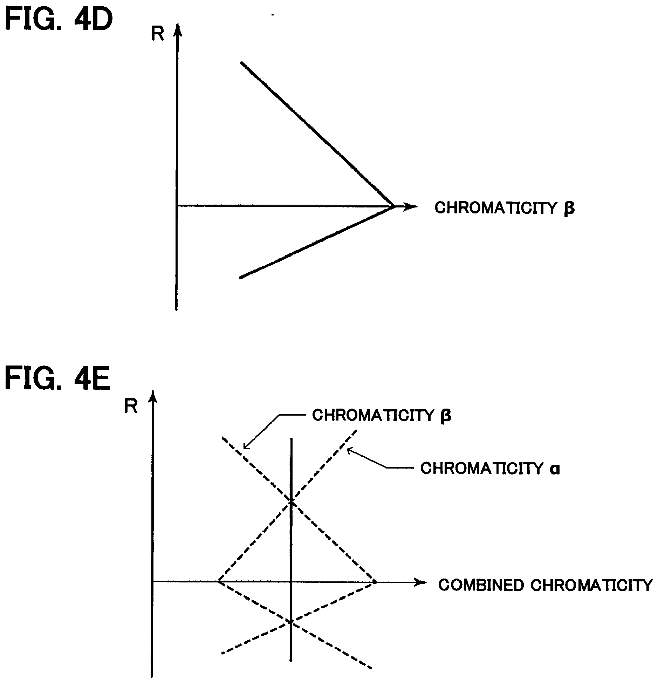

Fig. 4A is a simplified graph illustrating brightness distribution along one (vertical) direction, Fig. 4B is a simplified graph illustrating distribution of chromaticity α along the one direction ascribed to the brightness distribution illustrated in Fig. 4A, Fig. 4C is a simplified graph illustrating an example of current density distribution along the one direction, Fig. 4D is a simplified graph illustrating distribution of chromaticity β along the one direction ascribed to the current density distribution illustrated in Fig. 4C, and Fig. 4E is a simplified graph illustrating distribution of combined chromaticity formed by joining chromaticity α illustrated in Fig. 4B and chromaticity β illustrated in Fig. 4D.
Figs. 5A and 5B are schematic circuit diagrams of wiring example of semiconductor light emitting element array and current sources for five semiconductor light emitting elements in one column, and Fig. 5C is graph illustrating examples of electric power waveform Wp to be supplied to central part, and electric power waveform Wt to be supplied to peripheral parts.
Fig. 6A is a schematic plan view illustrating an example of areal distribution of light emitting diodes in a light emitting diode array which decreases from central part to peripheral parts, and Fig. 6B is a circuit diagram of wiring example for one column.
Fig. 7A is a block diagram illustrating schematic structure of front lighting system for vehicle using light emitting diode array, and Figs. 7B and 7C are graphs illustrating shapes of driving waveforms according to pulse width modulation and frequency modulation.
Fig. 8 is a schematic plan view illustrating another example of relative areal distribution of light emitting diodes in a light emitting diode array.
Fig. 9 is a graph illustrating relation of brightness of emitted lights from LED with respect to driving current density.
Figs. 10A and 10B are circuit diagrams illustrating wiring examples for light emitting diode array.
Fig. 11 is a circuit diagram of another wiring example for light emitting diolde array.
Fig. 12 is a diagram illustrating manner of illustrating ground surface with front lighting system for vehicle using light emitting diode array.
Fig. 13A is a side view of main parts of front lighting system for vehicle, a plan view of light emitting diode array, and a block diagram of front lighting system for vehicle, according to conventional art.
Fig. 13B is a plan view of the plurality of LEDs of the vehicle front lighting system of figure 13A.
Fig. 13C is a block diagram illustrating schematic structure of a conventional headlamp system.

### DESCRIPTION OF EMBODIMENTS

Semiconductor light emitting element array, especially semiconductor light emitting diode (LED) array can be used as light source for a vehicle headlamp. A semiconductor light emitting element, for example, has a phosphor layer for emitting yellow light above the upper surface of a blue light emitting diode, and has a function of emitting white light. The structure of respective semiconductor light emitting elements for constructing an array is not limited. For example, GaN-containing semiconductor light emitting element disclosed in embodiments of JP-A 2016-100252 (US Patent Application SN 14/936,501) proposed by the present inventors may be adopted.

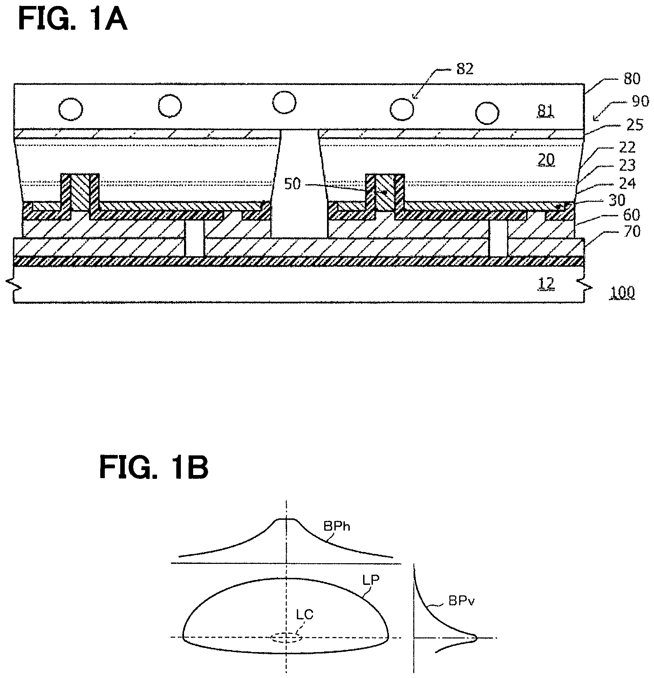

Fig. 1A illustrates example of cross-sectional structure of semiconductor light emitting element. Adjacent two elements are illustrated. Respective elements 20 are bonded on a support substrate 12 through binder layers 60 and 70. The element 20 comprises, from the side of the support substrate 12, a p-type layer 24, an active layer 23, and an n-type layer 22. The light emitting surface of the n-type layer 22 is formed with concave/convex structure 25 for effectively deriving lights. The binder layer 60 works also as electrode, is connected with p-type electrode 30 and n-via electrode 50, and functions as wiring between adjacent elements. A phosphor layer 80 is formed on the elements 20.

A semiconductor light emitting element array is constructed with a multiplicity of semiconductor light emitting elements disposed, for example, in matrix (rows and columns) pattern, and can form desired brightness distribution by adjusting brightness of the respective semiconductor light emitting elements.

Fig. 1B schematically illustrates an example of light distribution pattern. Forwardly-going light distribution pattern is denoted by LP. On the upper side and on the right side of LP, brightness distribution BPh along a horizontal cross section and brightness distribution BPv along a vertical cross section are shown. As front-lighting system for vehicle, it is desirable that the light distribution pattern has a maximum brightness at light distribution center which is generally extended horizontally, and has gradually decreasing brightness distribution toward peripheral parts. Vicinity of light distribution center may be called central part.

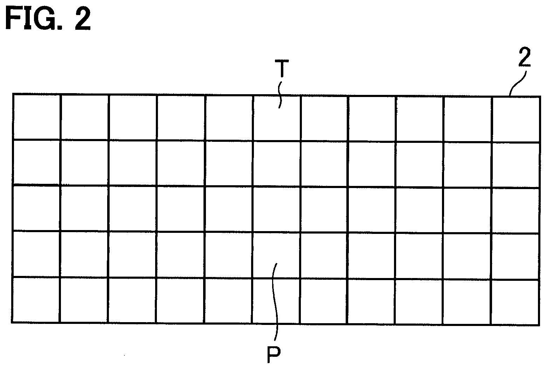

Fig. 2 is a schematic plan view of a light emitting element array of matrix configuration. Light emitting elements 2 of same shape are disposed in matrix pattern (for example, of the order of 8 rows x 30 columns, the figure illustrates simplified 5 rows x 11 columns). As front lighting system for vehicle, it is desirable to realize brightness distribution as illustrated in Fig. 1B in which the brightness distribution has maximum brightness at the front area and has gradually decreasing brightness as it goes toward peripheral parts. For forming brightness distribution as illustrated in Fig. 1B, the drive power at the central portion is set high, and the drive power is decreased as the position approaches toward periphery.

At the central part, since the drive power is large, amount of heat generation is large. Also, heat at the central part P in the semiconductor light emitting element array is hard to diffuse in planar direction. At the peripheral parts, the drive power and hence the heat generation decreases as the position approaches toward the periphery, and heat at the peripheral parts T becomes easy to diffuse. Thus, in the semiconductor light emitting element array, the temperature becomes high at the central part P, and decreases as the position approaches nearer to the periphery in the peripheral parts T. In a calculated example of temperature distribution, the temperature at the center P is 115 °C, and the temperature at the peripheral part T is 85 °C. A temperature difference of 30 °C is established between the central part P and the peripheral part T.

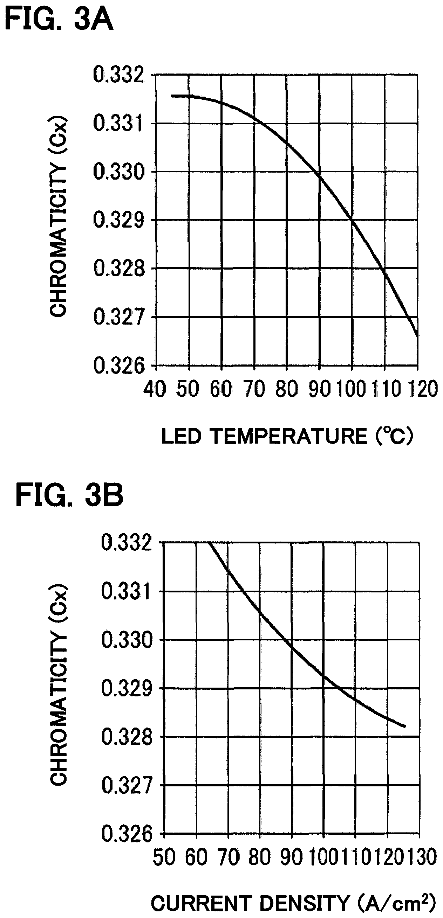

Fig. 3A is a graph illustrating an example of change of chromaticity of lights emitted from semiconductor light emitting diode (LED) with respect to temperature of the LED, taking the case of white LED using GaN-containing LED having InGaN active layer, and using yttrium aluminum garnet (YAG) as fluorescence wavelength changing layer. Current density is set to be constant. Abscissa represents temperature of LED in the unit of °C, and ordinate represents chromaticity of lights emitted from the LED in the unit of Cx.

In semiconductor light emitting element, the chromaticity of emitted lights has a tendency to decrease as temperature of the element increases. In a temperature region around 50°C, change of chromaticity due to change in temperature is small, but as the temperature rises, rate of decrease in chromaticity due to increase in temperature increases. When the temperature of the LED is 85 °C at point T in the peripheral portion, and is 115 °C at point P in the central portion, the temperature distributes in a range of 30 °C between P and T. Due to this temperature difference, the chromaticity decreases from about 0.3303 Cx at the peripheral part T to about 0.3272 Cx at the central part P, by about 0.003 Cx. Comparing the central part and the peripheral part, the central part is high in temperature and hence is low in chromaticity, being strong in blueish taste, and the peripheral part is low in temperature and hence is high in chromaticity, being strong in yellowish taste.

Repeatedly stating, in case when the brightness is made high in the central part in the field of view and is made decreasing as the position approaches toward the peripheral parts, the central part with high brightness should be driven with higher power. As the drive power in the central part is made high, the temperature will be increased to decrease the chromaticity. Comparing the central part and the peripheral parts, the central part with higher temperature and lower chromaticity will become strong in bluish taste, and the peripheral part with lower temperature and higher chromaticity will become strong in yellowish taste. Chromaticity distribution (color unevenness) will be generated by the formation of brightness distribution.

Semiconductor light emitting element changes the strength of emitted lights by changing the driving current density, and the conversion efficiency of phosphors changes with the exciting light intensity. In case when the driving current density is changed, the chromaticity of the emitted lights from LED changes depending on changes in the driving current density.

The present inventors have studied the possibility of generating light distribution pattern with less chromaticity distribution. It is considered indispensable to set the brightness at the central part of the field of view higher than that at the peripheral parts. For raising the brightness at the central part, it is necessary to supply increased driving power, which will lead to increased heat generation. The temperature at the central part should be increased and the chromaticity at the central part should become lower than that in the peripheral parts, presenting strong bluish taste.

Fig. 3B is a graph illustrating an example of dependency of chromaticity of lights emitted from semiconductor light emitting diode (LED) on driving current density of the LED, taking the case of white LED using GaN-containing LED having InGaN active layer, and using YAG as fluorescence wavelength changing layer. The temperature is set to be constant. The abscissa represents current density in the unit of A/cm², and the ordinate represents chromaticity of lights emitted from the LED in the unit of Cx. As the current density increases, the chromaticity decreases. The rate of decrease in the chromaticity due to increase in the current density has a tendency of decreasing with increase in the current density.

Brightness at the peripheral parts should be kept lower than that at the central part. But, the driving current density is not limited. It would become possible to compensate for the tendency that the chromaticity becomes low at the central part due to the formation of brightness distribution, when the driving current density is set low to increase the chromaticity in the central part than those in the peripheral parts.

Fig. 4A is a graph illustrating simplified brightness distribution in plane, as illustrated in Fig. 1B, along one direction (for example vertical direction). The ordinate represents distance R from the central part, assuming brightness center at the position of abscissa. The abscissa represents brightness. The brightness is high at the central part, and gradually decreases toward the periphery in the peripheral parts. Here, it is assumed that the current density is constant.

Fig. 4B is a graph schematically illustrating, when the brightness distribution as shown in Fig. 4A is formed by changing power consumption, distribution of chromaticity α along the one direction due to accompanying temperature distribution. Ordinate represents distance R from the central part, and abscissa represents the chromaticity α. The brightness center will have a high temperature by the supply of high driving current, and will have a lowered chromaticity. Peripheral parts will have lowered temperature and will have an increased chromaticity, as the position approaches periphery.

Fig. 4C is a graph schematically illustrating newly proposed change of driving current density for semiconductor light emitting elements at positions along one direction. It is to be noted that the driving current density is low at the central part and increases as the position goes toward the peripheral parts. Here, it is assumed that the temperature is constant. It may be noted that amount of supply power is not determined simply by the current density.

Fig. 4D is a graph schematically illustrating distribution of chromaticity *β* generated by the change of current density illustrated in Fig. 4C, along the one direction. As the position shifts from the central part toward the peripheral parts, the current density becomes high, and the chromaticity decreases.

Fig. 4E is a graph schematically illustrating changes in combined chromaticity formed of chromaticity α illustrated in Fig. 4B and chromaticity *β* illustrated in Fig. 4D along the one direction. In short, this graph illustrates a case where both current density and temperature in light emitting elements aligned along one direction change. It can be seen that changes in chromaticity α accompanying formation of brightness distribution (temperature distribution) is largely reduced by combining changes in chromaticity *β* accompanying current density distribution.

When a plurality of light emitting elements are driven by same current densities, chromaticity generated in the elements by these driving currents are the same. The chromaticity can be changed by changing the driving current density. Changes of practically occurring chromaticity will be the sum of chromaticity *α* of Fig. 4B and chromaticity *β* illustrated in Fig. 4D. It becomes possible to at least partially cancel the chromaticity change of Fig. 4B generated by the temperature distribution by chromaticity change of Fig. 4D generated by the current density change.

For forming brightness distribution, it is necessary to arrange supply of electric power in the peripheral parts less than that in the central part. Usually for increasing brightness in the central part, current density for the central part is increased higher than that for the peripheral parts. Based on the above consideration, while current density at the peripheral parts is arranged to be higher than that for the central part, countermeasure for not increasing the supply of electric power at the peripheral parts than that at the central part should be taken.

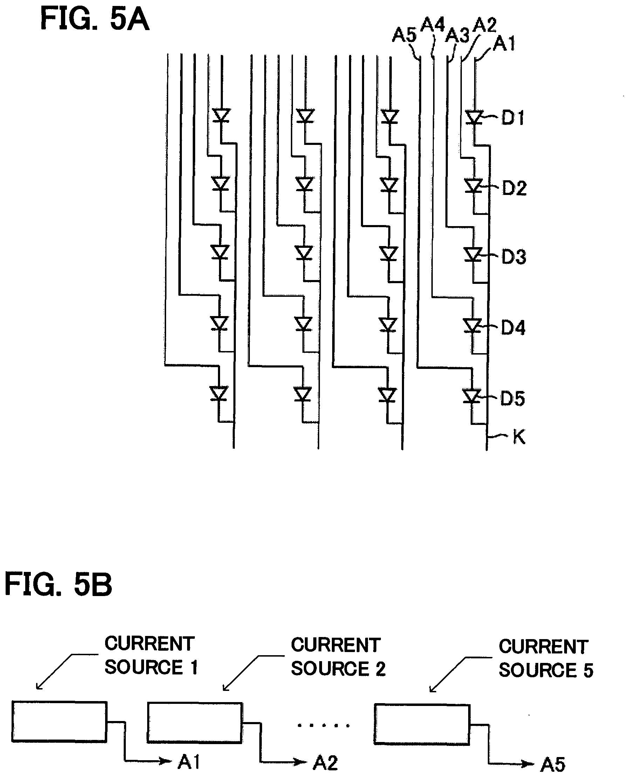

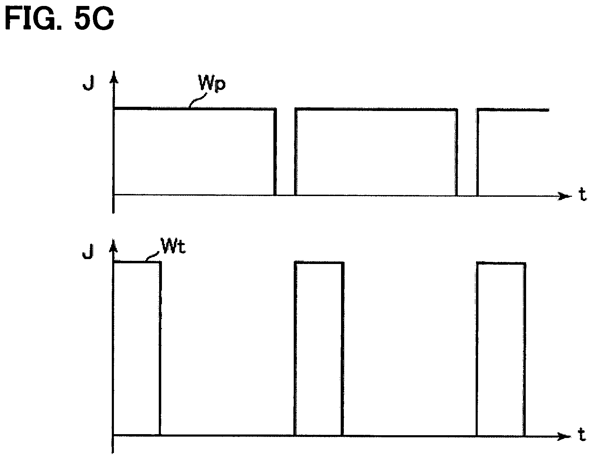

Fig. 5A is a circuit diagram schematically illustrating wiring example for semiconductor light emitting element array, Fig. 5B is a circuit diagram of five current sources for five semiconductor light emitting elements in one column, and Fig. 5C illustrates graphs of examples of waveform Wp of supplied electric power in the central part unit and waveform Wt of supplied electric power in peripheral part unit. As illustrated in Fig. 2, it is assumed that semiconductor light emitting elements of same shape are arranged in matrix configuration.

In Fig. 5A, five light emitting diodes D1, D2, D3, D4, and D5 are aligned in vertical direction, with their cathodes connected to common cathode wiring K, and their anodes A1, A2, A3, A4, and A5 wired independently. As illustrated in Fig. 5B, the five anodes A1 - A5 are connected for example with independently controllable respective current sources.

In Fig. 5C, upper graph illustrates current supply Wp for a semiconductor light emitting element in the central part, and lower graph illustrates current supply Wt for a semiconductor light emitting element in the peripheral part. Current supply for the central part is done in greater portion of the period (it may be continuous, dc supply), while current supply for the peripheral part is only done in limited portion of the period, for example about one fourth (1/4) of the full period. Even when the instantaneous supply power for the peripheral part is set about twice the instantaneous supply power for the central part, it is possible to limit the supply power for the peripheral part less than 60 % of the supply power for the central part in the period.

Various methods for increasing the current density and decreasing the supply power at the same time can be considered. In the above example, LEDs in the light emitting element array have same light emitting area similar to the conventional art, and the drive current sources are arranged to be independent for the respective semiconductor light emitting elements. Current values during the period in which current is supplied are set as Wt > Wp, current value for a light emitting element in the peripheral part is made larger than that in the central part, enlarging the current density in the peripheral part larger than that for the central part. Considering one period, however, since the time of current supply for a light emitting element in the peripheral part is short, total electric power for a light emitting element in the peripheral part (corresponding to area of current ON in the figure) becomes smaller than that for a light emitting element in the central part. By this arrangement, the central part is given a higher brightness, and also an element is given a lowered current density, compared to the peripheral part.

Here, term "current value" means amount of current supplied to a single semiconductor light emitting element, and term "current density" means amount of current per unit area in a state where thrown current spreads in the plane. This method, however, complicates the structure of current source. It can also be considered to drive semiconductor light emitting elements at different drive current densities with a constant current value, by varying areas of the semiconductor light emitting elements. It becomes possible to simplify the drive circuit.

When the light emitting area of a semiconductor light emitting element is decreased, current density will be increased, even at the same current value. Even when the thrown current value is the same, the spread of current in the semiconductor light emitting element becomes different. When the drive current density for a light emitting element in the peripheral part is set higher compared to a central part, it is expected that the chromaticity in the peripheral part is lowered, to cancel the chromaticity distribution (color unevenness), improving the total color unevenness. Of course, it is possible to increase the instantaneously thrown current density in the peripheral part, while decreasing area of the semiconductor light emitting element in the peripheral area, for increasing the effect of cancelling the chromaticity distribution.

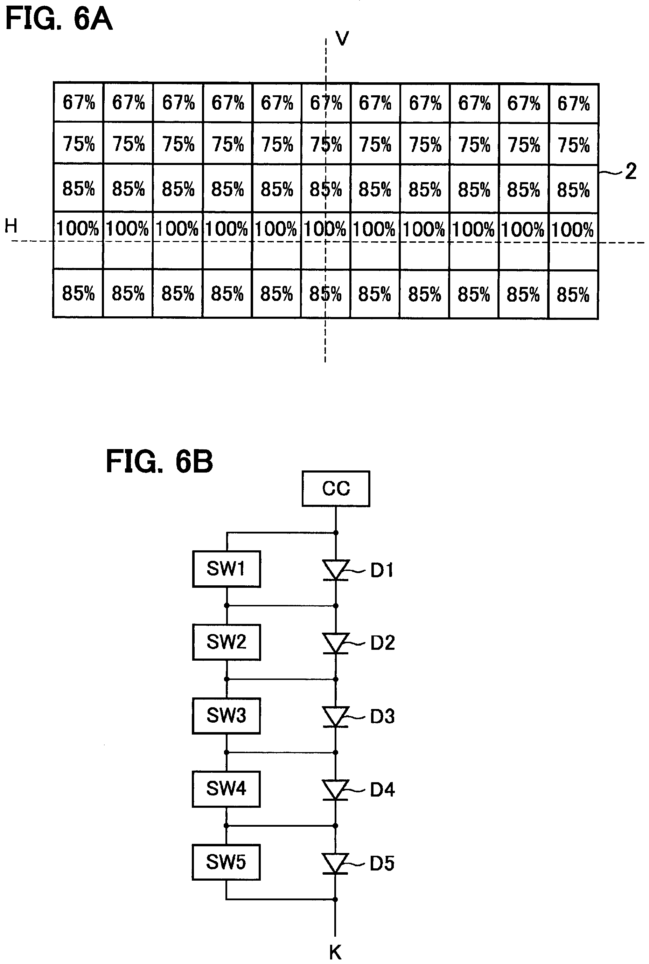

Fig. 6A is a plan view schematically illustrating a structural example in which semiconductor light emitting elements constituting a semiconductor light emitting element array changes the light emitting area along a certain direction. Light emitting diodes 2 are arranged in matrix pattern of five rows and eleven columns, similar to Fig. 2. Numerical values indicated in the respective elements indicate relative light emitting area. The directions shown in the figure are not the practical arrangement directions of the semiconductor light emitting element array, but follow the directions of emitted lights from lighting device for vehicle. Namely, up / down direction in the figure represents vertical direction, and right / left direction represents horizontal direction.

Among five semiconductor light emitting elements 2 aligned in vertical V direction in one column, the second element from the bottom has the maximum area of 100 %, and the upper and lower adjacent elements have decreased relative area of 85 %. Further upper elements have decreasing relative areas of 75 % and 67 % as the position shifts upward. When the respective elements are supplied with same current values, the current density becomes proportional to inverse of the area. Driving current densities of the semiconductor light emitting elements in the peripheral parts around the central semiconductor light emitting element having the maximum area, become 100 / 85, 100 / 75, 100 / 67 of the driving current density of the central semiconductor light emitting element. The driving current density increases about 50 % at the end. Elements in the same row aligned in horizontal H direction have the same light emitting area.

Fig. 6B is a wiring diagram illustrating an example of semiconductor light emitting element circuit in one column. Series connection of light emitting diodes D1, D2, D3, D4, and D5 is connected between a constant current source CC and cathode K. When the elements are driven by a driving current from the constant current source CC, driving current densities in the diodes D1, D2, D3, D4, and D5 will have ratios of 100 / 67, 100 / 75, 100 / 85, 100 / 100, and 100 / 85. As the current density increases from the central part to both the peripheral parts, the chromaticity decreases from the central part to both the peripheral parts. The peripheral parts will have stronger bluish taste. For example, increasing the drive current density by about 50 %, chromaticity will decrease by about 0.002. Current densities increasing toward peripheries will cancel chromaticity distribution increasing toward peripheries based on the brightness distribution. The total chromaticity distribution will be uniformalized.

In the circuit of Fig. 6B, series connection of switches SW1, SW2, SW3, SW4, and SW5 is connected in parallel to the series connection of the diodes D1, D2, D3, D4, and D5, with mutual interconnection points also connected. Namely, switches SW1, SW2, SW3, SW4, and SW5 are connected parallel to the diodes D1, D2, D3, D4, and D5. When a switch, e.g. SW3 is short-circuited, corresponding diode D3 is also short-circuited, stopping emission of lights. Short circuit of the switch changes light emitting state to light non-emitting state. Optional light emitting elements can be set to light non-emitting state, enabling fine ADB control. Switches connected to light emitting diodes of low brightness may be omitted for simplifying the structure.

For maintaining desired brightness distribution, it is necessary to suppress the power supplied to the peripheral parts at predetermined values lower than the power supplied to the central part. For example, current supply to the central part D4 is arranged to be continuous dc (100 %), and drive currents for elements (D3, D5), D2, and D1 are duty-modulated (controlled) to 85 %, 75 %, and 67 %, decreasing supply power from the central part toward the peripheral parts.

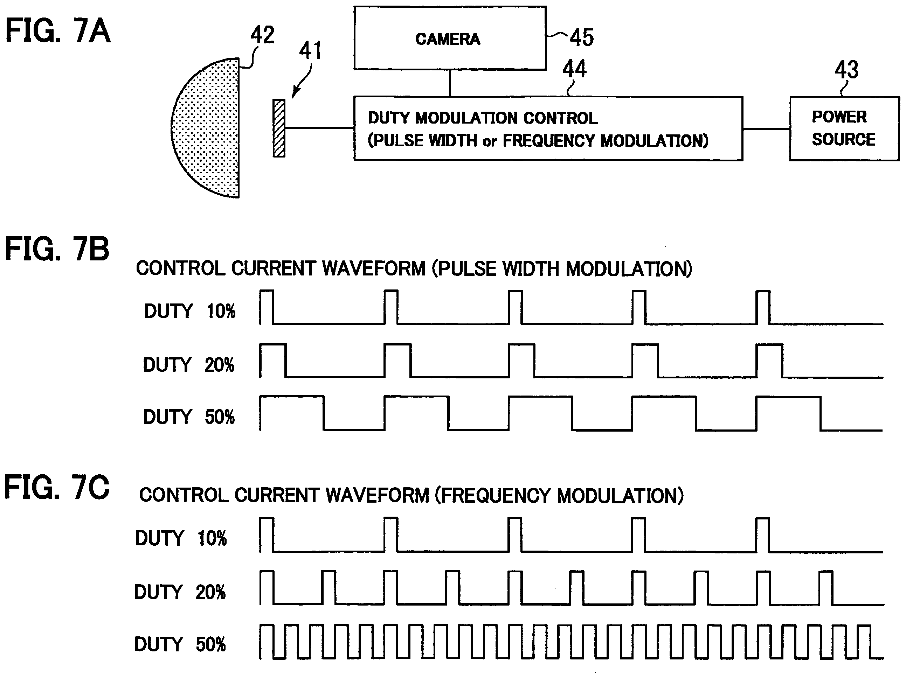

Fig. 7 is a block diagram schematically illustrating a front lighting device for vehicle using light emitting diode array. Lens unit 42 is disposed in front of light emitting diode array 41, to irradiate lights emitted from the light emitting diode array to forward direction. Power source unit 43 supplies modulation controlled driving currents to light emitting diode array through duty modulation control unit 44. Camera unit 45 establishes images in front of the vehicle, etc. and supplies information of coming car, going ahead car etc. to the duty modulation control unit 44. The duty modulation control unit 44 performs modulation control driving by pulse width modulation or frequency modulation, and also light emission stop treatment in particular direction.

Fig. 7B illustrates variations of driving waveform by pulse width modulation. Drive waveforms of duties 10 %, 20 %, and 50 % are illustrated from the above. Current values to be thrown are assumed to be constant.

Fig. 7C illustrates variations of driving waveform by frequency modulation. Drive waveforms of duties 10 %, 20 %, and 50 % are illustrated from the above. The number of pulses in a fixed period is modulated. In the periods overlapping with voltage application for time-divided respective rows, light emitting diodes are driven.

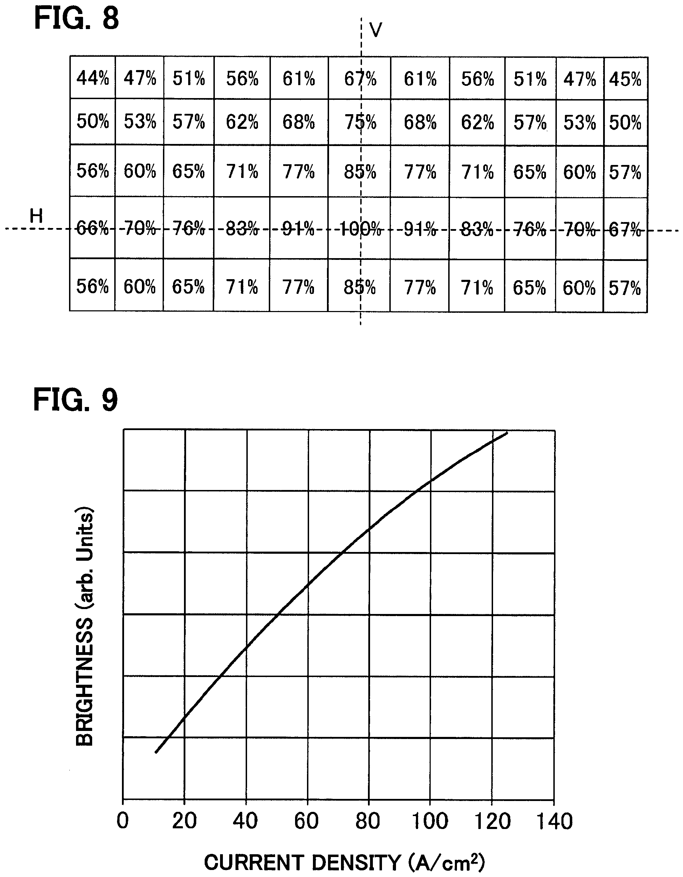

Fig. 8 is a plan view illustrating another example of changing relative areas of the light emitting diode elements distributed in a light emitting diode array. In the structure of Fig. 6A, light emitting areal ratios of light emitting diode elements aligned in vertical direction corresponding to column of the matrix is set such as central element D4 is 100 %, and as the position shifts toward peripheries, (D3, D5) is 85 %, D2 is 75 %, and D1 is 67 %, and elements of the same structure are disposed at equal pitch in the horizontal direction corresponding to row of the matrix. Selection of central position in the horizontal direction can be freely done, adapted for doing AFS. Brightness distribution in the horizontal direction is done by modulating supply current.

The structure of Fig. 8 changes the light emitting area also in the horizontal direction. It becomes easier to form brightness distribution being high at the center and decreasing low as the position approaches peripheries. The light emission area ratios in the central column along the vertical direction V is the same as Fig. 6. Departing toward right and left sides, the ratio decreases. The areal ratio at the left end column is somewhat decreased from the areal ratio at the right end column, enabling more adaptive setting for the structure providing two front lamps at the right and left in front end of a vehicle. In this variation, the duty modulation control unit 44 as illustrated in Fig. 7A has two-dimensional control facility.

As described above, the duty ratio is adjusted to adjust brightness control. Here, the light emission efficiency of the semiconductor light emitting element has a tendency of decreasing as the thrown current density increases.

Fig. 9 is a graph illustrating dependency of brightness on current density. There is a tendency that brightness becomes saturated as the current density increases. Considering this characteristics, it will be preferable to finely adjust the product of light emission area of the semiconductor light emitting element in a peripheral area and current density. For example, it may be preferable to preliminarily make samples, and optimize the design to realize preferable characteristics.

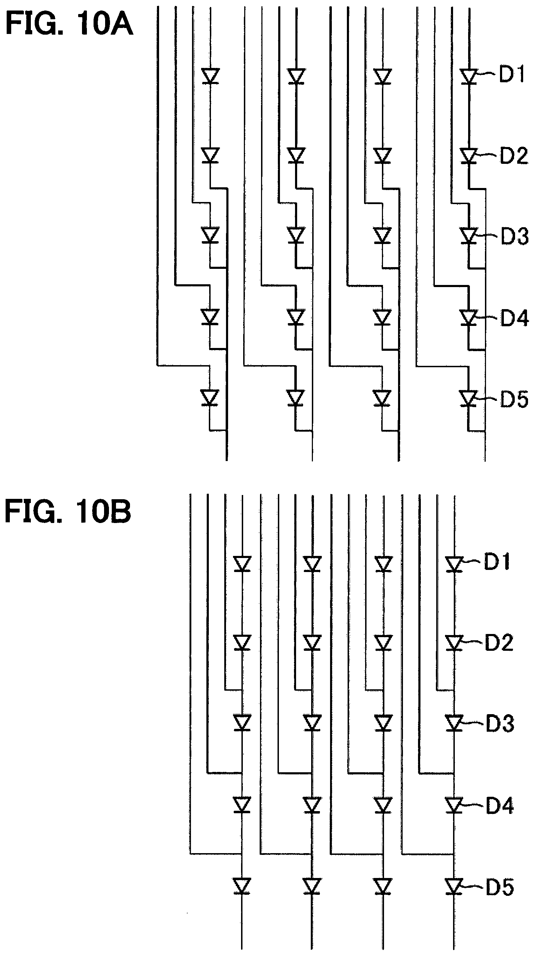

Figs. 10A and 10B illustrate structures in which a plurality of light emitting elements are controlled at the same time in the same manner in peripheral parts where fine resolution is not necessarily required. The uppermost light emitting element D1 and the next light emitting element D2 in a same column receive same control. The drive circuit can be simplified.

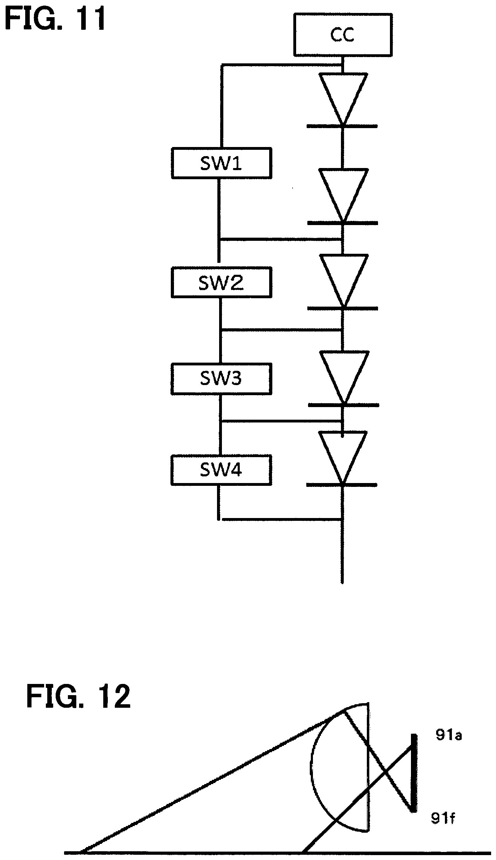

As illustrated in Fig. 11, it is also possible that one switch controls jointly a plurality of semiconductor light emitting diodes. Also, in case when respective semiconductor light emitting elements can be driven, it becomes possible to vary the brightness distribution by the control of the power source depending on the situation. Here, however, in a lighting device for vehicle, basic light distribution pattern is preliminarily determined, and light emitting diode array is formed on the predetermined light distribution pattern. Thus, optimum light emitting diode array is designed so that a semiconductor light emitting element providing the maximum brightness upon reproducing the basic light distribution pattern has the maximum area. As a result, a light emitting diode array in which the area of the light emitting diode decreases as the position is departed from the semiconductor light emitting element of the maximum area.

It is preferable that the minimum area element is located at one outermost end. Also, in lighting device for vehicle, position of the maximum brightness is preferably located at position biased to one side and separated by some distance from the outermost position. Thus, the position of the maximum brightness, the element of the maximum size in Fig. 6A or 8, is the second element from the lower side, i.e. at a position sandwiched between the two end elements in column direction. Even if the brightness distribution can be varied depending on the circumstances, it can be said that in lighting device for vehicle, there is tendency that a brightness center exists and the brightness decreases toward the peripheries. Changes occur in the degree of brightness change. The tendency that the light emitting diode array has a central part at which the brightness is highest, and the brightness decreases as the position shifts toward peripheral parts is common. Such control is done by duty modulation control unit 44 and power source unit 33.

Fig. 12 is a diagram illustrating how a front lighting device for vehicle using light emitting diode array illumines ground surface. Lights emitted from the light emitting diode array are irradiated on the ground surface through lens system. It is not limited as illustrated in the figure where the light emitting element array is disposed in the lighting device. The semiconductor light emitting element in the array which becomes maximum brightness is located in the column direction at a position biased from the center toward one side. In the light emitting element array in Fig. 6A or 8, the maximum brightness, and hence the semiconductor light emitting element of the maximum size is located at the second position, biased to one side. Upon the ground surface, the most near position from the lighting device is illuminated by the end light emitting element on the side near the maximum brightness, and the most far position is illuminated by the end light emitting element on the opposite side. Thus, the lighting device of Fig. 12 is arranged to illuminate the near area with biased strong brightness elements, and the most far position is illuminated by the end light emitting elements with less brightness. If illumination is to be done on an imaginary screen vertical to the ground, the lower side (ground side) as in Fig. 1B is illuminated by the lower side elements in Fig. 6A or 8, and the upper side as in Fig. 1B is illuminated by the opposite side elements.

Description has been made to dispose high brightness element at a central part and lower brightness elements in peripheral parts. In case of duty drive, consideration should be made on time averaged brightness. Namely, averaged brightness in one period of the drive signal should be considered. As stated above, in the semiconductor light emitting diode array providing brightness distribution having high brightness at a central part and decreasing as the position approaches peripheral parts, control is done to decrease the chromaticity as the position approaches the peripheral parts on assumption of uniform temperature, cancelling chromaticity distribution ascribed to temperature distribution. Decrease of chromaticity in the peripheral parts may be done by decreasing current density.

The invention has been described along the embodiments, but the invention is not limited thereto. Numerical values and materials described in the description are examples, and are not limitative. Publicly known equivalents can be substituted. For example, light emitting diodes may be changed to semiconductor lasers. Since the semiconductor laser has diode structure, LED is a concept covering laser.

## Claims

1. A lighting device for vehicle, comprising:
a light source; and
a controller;
wherein said light source includes a semiconductor light emitting element array in which a plurality of semiconductor light emitting elements (2, 20) are two-dimensionally disposed, and each of said semiconductor light emitting elements (2, 20) is provided with a fluorescence light emitting part (80), the lighting device being **characterised in that**:
said controller is adapted to independently control groups of the semiconductor light emitting elements (2, 20) aligned in one direction, and
wherein said controller is adapted to duty-drive said groups of the semiconductor light emitting elements (2, 20), changing current supply periods in a central part (P) and in a peripheral part (T) with respect to said one direction, such that the semiconductor light emitting elements (2, 20) are given higher supply power in the central part (P) than in the peripheral part (T), forming a brightness distribution having a higher brightness in the central part (P) than in the peripheral part (T), and in which current density is set lower in the central part (P) than in the peripheral part (T), so that the current density becomes larger from the central part (P) toward the peripheral part (T), while the supply power becomes smaller from the central part (P) toward the peripheral part (T).

2. The lighting device for vehicle according to claim 1, wherein said one direction is vertical direction in illuminating lights.

3. The lighting device for vehicle according to claim 1 or 2, wherein said plurality of semiconductor light emitting elements (2) are arranged in matrix pattern.

4. The lighting device for vehicle according to one of claims 1 - 3, wherein among said plurality of semiconductor light emitting elements (2, 20) arranged along said one direction, a semiconductor light emitting element in the central part (P) has a larger area than a semiconductor light emitting element in the peripheral part (T).

5. The lighting device for vehicle according to claim 4, wherein in said semiconductor light emitting elements (2, 20) arranged along said one direction, a semiconductor light emitting element having a largest area is disposed at said central part (P), and a semiconductor light emitting element having a smallest area is disposed at an outermost periphery.

6. The lighting device for vehicle according to one of claims 1 - 5, wherein in said light source the semiconductor light emitting elements (D1-D5) arranged in said one direction are serially connected, and said controller has terminals extending from connection nodes between adjacent ones of the semiconductor light emitting elements (2, 20) and switches (SW1-SW5) connected between each pair of adjacent ones of terminals.

## Patentansprüche

1. Beleuchtungsvorrichtung für ein Fahrzeug, die Folgendes aufweist:
eine Lichtquelle; und
eine Steuervorrichtung;
wobei die Lichtquelle eine Halbleiter-Leuchtelementanordnung aufweist, in der eine Vielzahl von Halbleiter-Leuchtelementen (2, 20) in zweidimensionaler Weise angeordnet ist, und jedes der Halbleiter-Leuchtelemente (2, 20) mit einem Fluoreszenzleuchtteil (80) vorgesehen ist, wobei die Beleuchtungsvorrichtung, **dadurch gekennzeichnet ist, dass**:
die Steuervorrichtung ausgelegt ist, um in unabhängiger Weise Gruppen der Halbleiter-Leuchtelemente (2, 20) zu steuern, die in einer Richtung ausgerichtet sind, und
wobei die Steuervorrichtung ausgelegt ist, um pflichtgemäß bzw. gemäß einer Vorschrift die Gruppen der Halbleiterleuchtelemente (2, 20) anzutreiben, wobei Stromlieferperioden in einem zentralen Teil (P) und einem peripheren Teil (T) in Bezug auf die eine Richtung verändert werden, so dass die Halbleiter-Leuchtelemente (2, 20) eine höhere Leistungsversorgung in dem zentralen Teil (P) als in dem peripheren Teil (T) erhalten, wobei eine Helligkeitsverteilung mit einer höheren Helligkeit in dem zentralen Teil (P) als in dem peripheren Teil (T) gebildet wird, und wobei die Stromdichte in dem zentralen Teil (P) niedriger als in dem peripheren Teil (T) eingestellt wird, so dass die Stromdichte von dem zentralen Teil (P) zu dem peripheren Teil (T) zunimmt, während die Versorgungsleistung von dem zentralen Teil (P) zu dem peripheren Teil (T) abnimmt.

2. Beleuchtungsvorrichtung für ein Fahrzeug gemäß Anspruch 1, wobei die eine Richtung eine vertikale Richtung in den Beleuchtungslichtern ist.

3. Beleuchtungsvorrichtung für ein Fahrzeug gemäß Anspruch 1 oder 2, wobei die Vielzahl der Leuchtelemente (2) in einem Matrixmuster angeordnet ist.

4. Beleuchtungsvorrichtung für ein Fahrzeug gemäß einem der Ansprüche 1 bis 3, wobei innerhalb der Vielzahl von Halbeiterleuchtelementen (2, 20), die entlang der einen Richtung angeordnet sind, ein Halbleiterleuchtelement in dem zentralen Teil (P) einen größeren Bereich als ein Halbleiterleuchtelement in dem peripheren Teil (T) aufweist.

5. Beleuchtungsvorrichtung für ein Fahrzeug gemäß Anspruch 4, wobei in den Halbleiterleuchtelementen (2, 20), die entlang der einen Richtung angeordnet sind, ein Halbleiterleuchtelement, das einen größten Bereich aufweist, bei dem zentralen Teil (P) angeordnet ist, und ein Halbleiterleuchtelement, das einen kleinsten Bereich aufweist, an einer äußersten Peripherie angeordnet ist.

6. Beleuchtungsvorrichtung für ein Fahrzeug gemäß einem der Ansprüche 1 bis 5, wobei in der Lichtquelle die Halbleiterleuchtelemente (D1-D5), die in der einen Richtung angeordnet sind, in Reihe verbunden sind, und die Steuervorrichtung Anschlüsse aufweist, die sich von den Verbindungsknoten zwischen benachbarten Halbleiterleuchtelementen (2, 20) und Schaltern (SW1-SW5) erstrecken, die zwischen jedem Paar von benachbarten Anschlüssen verbunden sind.

## Revendications

1. Dispositif d'éclairage pour véhicule, comprenant :
une source de lumière ; et
un contrôleur ;
dans lequel la source de lumière comprend une matrice d'éléments électroluminescents à semi-conducteur dans laquelle une pluralité d'éléments électroluminescents à semi-conducteur (2, 20) est disposée de manière bidimensionnelle, et chacun des éléments électroluminescents à semi-conducteur (2, 20) est muni d'une partie électroluminescente à fluorescence (80), le dispositif d'éclairage étant **caractérisé en ce que** :
le contrôleur est adapté à contrôler indépendamment des groupes des éléments électroluminescents à semi-conducteur (2, 20) alignés dans une direction donnée, et
dans lequel le contrôleur est adapté à contrôler la marche des groupes des éléments électroluminescents à semi-conducteur (2, 20), en changeant des périodes de fourniture de courant dans une partie centrale (P) et dans une partie périphérique (T) en ce qui concerne ladite direction, de sorte que les éléments électroluminescents à semi-conducteur (2, 20) se voient appliquer une puissance d'alimentation supérieure dans la partie centrale (P) par rapport à la partie périphérique (T), formant une distribution de luminosité ayant une luminosité supérieure dans la partie centrale (P) par rapport à la partie périphérique (T), et dans lequel la densité de courant est réglée pour être inférieure dans la partie centrale (P) par rapport à la partie périphérique (T) de sorte que la densité de courant augmente à partir de la partie centrale (P) en direction de la partie périphérique (T), alors que la puissance d'alimentation diminue à partir de la partie centrale (P) en direction de la partie périphérique (T).

2. Dispositif d'éclairage pour véhicule selon la revendication 1, dans lequel ladite direction est une direction verticale dans les lumières d'éclairage.

3. Dispositif d'éclairage pour véhicule selon la revendication 1 ou 2, dans lequel la pluralité d'éléments électroluminescents à semi-conducteur (2) est agencée selon un motif matriciel.

4. Dispositif d'éclairage pour véhicule selon l'une quelconque des revendications 1 à 3, dans lequel parmi la pluralité d'éléments électroluminescents à semi-conducteur (2, 20) agencés suivant ladite direction, un élément électroluminescent à semi-conducteur se trouvant dans la partie centrale (P) a une plus grande surface qu'un élément électroluminescent à semi-conducteur se trouvant dans la partie périphérique (T).

5. Dispositif d'éclairage pour véhicule selon la revendication 4, dans lequel dans les éléments électroluminescents à semi-conducteur (2, 20) agencés suivant ladite direction, un élément électroluminescent à semi-conducteur ayant la surface la plus grande est disposé au niveau de la partie centrale (P), et un élément électroluminescent à semi-conducteur ayant la surface la plus petite est disposé au niveau d'une périphérie la plus extérieure.

6. Dispositif d'éclairage pour véhicule selon l'une quelconque des revendications 1 à 5, dans lequel dans la source de lumière les éléments électroluminescents à semi-conducteur (D1-D5) agencés dans ladite direction sont connectés en série, et le contrôleur comporte des bornes s'étendant à partir de noeuds de connexion entre des éléments adjacents parmi les éléments électroluminescents à semi-conducteur (2, 20) et des commutateurs (SW1-SW5) connectés entre chaque paire de bornes adjacentes parmi les bornes.
